# EUROPEAN PATENT SPECIFICATION

(11) **EP 3 145 158 B1**
(45) Date of publication and mention of the grant of the patent: **27.05.2020**
(21) Application number: 16176720.7
(22) Date of filing: 28.06.2016
(51) Int. Cl.: H04L 29/08, H04L 12/28, G06F 9/451, G06F 9/44, H04W 4/00, H04L 29/06, H04L 12/26

(54) **METHOD FOR CONTROLLING INFORMATION TERMINAL, AND APPLICATION SYSTEM**
VERFAHREN ZUR STEUERUNG EINES INFORMATIONSENDGERÄTS UND ANWENDUNGSSYSTEM
PROCÉDÉ DE COMMANDE DE TERMINAL D'INFORMATION ET SYSTÈME D'APPLICATION

(30) Priority: 15.09.2015 JP 2015181943
(43) Date of publication of application: 22.03.2017
(73) Proprietor: Panasonic Intellectual Property Management Co., Ltd., Osaka-shi, Osaka 540-6207 (JP)
(72) Inventor: TOUGOU, Hitomaro, Osaka, 540-6207 (JP); KAWAMATA, Teruyasu, Osaka, 540-6207 (JP)
(74) Representative: Eisenführ Speiser

(56) References cited:
- WO-A1-2010/096923
- JP-A- 2002 071 246
- JP-A- 2008 140 203
- US-A1- 2002 075 297
- US-A1- 2013 339 736
- US-A1- 2014 082 706

## Description

### BACKGROUND

### 1. Technical Field

The present disclosure relates to a method for controlling an information terminal and to an application system, with which a communication system is used to remotely monitor an electrical device and remotely control the electrical device.

### 2. Description of the Related Art

US 2013/0339736 A1 discloses periodic platform based web session re-validation and relates to systems, apparatus and methods for periodically validating the identity of two or more machines that have established a secure communication connection over a network. A client may initiate a secure communication session with a server by providing an identification certificate. Upon establishing a secure connection with the server, the client may periodically reaffirm its identity by sending a secure heartbeat message that includes a timestamp offset and a client identifier in order to keep the connection open. The server can require periodic receipt of the secure heartbeat message in order to maintain the secure communication session. The client identifier may include a code or value based on a unique physical attribute of the client. The timestamp offset may be calculated by the client based on a timestamp provided by the server.

Systems have become widespread in which, for example, a communication device is connected to an electrical device such as a refrigerator or an air conditioner installed inside a factory or a store, and the operating state and so forth of the electrical device is remotely monitored and the electrical device is remotely controlled via the Internet or the like. In particular, technology with which a device is remotely monitored by means of a web application can be used to easily implement remote monitoring and remote control provided there is Internet connection equipment and a terminal device such as a PC or a mobile terminal, and can therefore improve the maintainability of the electrical device and is highly convenient.

Japanese Unexamined Patent Application Publication No. 2002-71246 and Japanese Unexamined Patent Application Publication No. 2008-140203 disclose examples of technology relating to the abovementioned.

### SUMMARY

However, in the prior art, it is difficult to establish both an automatic update function for a web application screen and a technique for disabling a session by means of a session timeout.

In one general aspect, the techniques disclosed here feature a method for controlling an information terminal that includes: (a) requesting a server to transmit update information for predetermined information included in an application screen before a session with the server is timed out after no request to the sever continues during a first time; (b) displaying the application screen including the update information received from the server; and (c) not displaying the application screen corresponding to an operation with respect to the application screen that leads to an application screen including security information being displayed when the operation is executed by an operator after lapse of a second time from a most recent operation with respect to the application screen by the operator.

Such comprehensive or specific aspects may be realized by using a system, a method, an integrated circuit, a computer program, or a recording medium. Alternatively, such comprehensive or specific aspects may be realized by using an arbitrary combination of a system, a device, a method, an integrated circuit, a computer program, and a recording medium.

According to an aspect of the present disclosure, it is possible to establish both an automatic update function for a web application screen and a technique for disabling a session by means of a session timeout.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages. The invention is disclosed in the appended claims.

### BRIEF DESCRIPTION OF THE DRAWINGS

Figs. 1A to 1C are drawings depicting examples of overall views of an information provision system in an embodiment of the present disclosure;
Fig. 2 is a block configuration diagram of an electrical device monitoring system serving as an example of an application system according to an embodiment of the present disclosure;
Fig. 3 is a block diagram depicting an example of a configuration of a server device;
Fig. 4 is a block diagram depicting an example of a configuration of an information terminal;
Fig. 5 is a sequence diagram for describing a session timeout function in a web application service;
Fig. 6 is a flowchart depicting an example of an operation of a web application operator in a session timeout function;
Fig. 7 is a flowchart depicting an example of an operation of a session timeout determiner in a session timeout function;
Fig. 8 is a sequence diagram for describing a screen operation timeout function in a web application service;
Figs. 9A and 9B are drawings depicting examples of a screen for which an automatic update is performed;
Fig. 10 is a flowchart depicting an example of an operation of a server device when a screen operation timeout function operates;
Figs. 11A and 11B depict a first example of a screen in a screen operation timeout state;
Figs. 12A and 12B depict a second example of a screen in a screen operation timeout state;
Figs. 13A and 13B depict a third example of a screen in a screen operation timeout state;
Fig. 14 is a drawing depicting a hardware consideration of a computer that realizes functions of devices by means of a program;
Fig. 15 is a drawing depicting service model 1 (type where a company itself serves as a data center);
Fig. 16 is a drawing depicting service model 2 (laaS-utilizing type);
Fig. 17 is a drawing depicting service model 3 (PaaS-utilizing type); and
Fig. 18 is a drawing depicting service model 4 (SaaS-utilizing type).

### DETAILED DESCRIPTION

### (Findings Forming Basis of the Present Disclosure)

The present inventors discovered that the following problem occurs in consideration of the prior art described in the "Description of the Related Art" section.

Systems have become widespread in which, for example, a communication device is connected to an electrical device such as a refrigerator or an air conditioner installed inside a factory or a store, and the operating state and so forth of the electrical device is remotely monitored and the electrical device is remotely controlled via the Internet or the like. In particular, technology with which a device is remotely monitored by means of a web application can be used to easily implement remote monitoring and remote control provided there is Internet connection equipment and a terminal device such as a PC or a mobile terminal, and can therefore improve the maintainability of the electrical device and is highly convenient.

As an example of this kind of technology, Japanese Unexamined Patent Application Publication No. 2002-71246 discloses a remote monitoring system for an electronic or electrical device that is implemented by means of a web application. In the remote monitoring system disclosed in Japanese Unexamined Patent Application Publication No. 2002-71246, in the case where an abnormality in an electrical device has occurred, a warning providing notification of that abnormality is transmitted to a plurality of user terminals, and the users who use the terminal devices are able to implement a countermeasure on the basis of the content of that warning.

Generally, with a web application, a server device provides a specific service through a web browser to a client terminal. Security information such as the personal information of users is sometimes handled in web applications, and, in such cases, a user generally uses a client terminal to log in to a server device using a login ID and a password that are registered at the server side.

However, in recent years, there has been a demand for not only simple login authentication functions but also more advanced security measure techniques with respect to services which use web applications that handle personal information. An example of this kind of technology is a technique in which, after a login has been performed from a client terminal to a server device, if a request to the server device side such as the acquisition of browser screen information is not generated from the client terminal side for a predetermined time or longer, the server device automatically disables (stops) that session.

This predetermined time is referred to as a session timeout time, for example. In the case where a state in which the client terminal is not used by the user has elapsed for the session timeout time or longer, the server device disconnects (disables) that session. The user is not able to reuse that service without once again performing a login authentication from the client terminal. Thus, a client terminal that has been left for the predetermined time or longer without being operated can no longer be used by a malicious third party, and the security of a service can therefore be ensured.

As an example of this kind of technology, Japanese Unexamined Patent Application Publication No. 2008-140203 for example discloses a technique in which, in addition to a system timeout time for an entire web system, a secondary timeout time which is a time that is shorter than the system timeout time is set for each web page, and if the period for which a user accesses a server device is between the secondary timeout time and the system timeout time, the session can be continued by merely resending login information such as a password.

There are also functions with which, in a display device of a client terminal, at least some information on a web application screen is automatically updated in a periodic manner regardless of user operations. In the case where this kind of automatic update function is included in the abovementioned technique in which a session is disabled when a session timeout time has elapsed, the server device periodically receives requests for automatic updates and therefore does not determine that a non-operation state has been entered even when user operations are not actually being performed, and a session timeout does not occur. Consequently, a state in entered in which a session is always active, and in the case where a malicious third party hijacks the session or the like and steals the session ID for example, a situation may occur in which the security information handled in the web application by means of that session ID is stolen.

Therefore, an automatic update function is generally not included in a web application service in which security information is included. However, in a web application in which the remote monitoring and remote control of an electrical device or the like is performed, it is desirable that information relating to the operating state and warnings be periodically updated with reference always being made to new information, and it is therefore desirable that an automatic update function and a session timeout function for ensuring security be established together.

In order to solve the abovementioned problem, a method for controlling an information terminal according to an aspect of the present disclosure includes: (a) requesting a server to transmit update information for predetermined information included in an application screen before a session with the server is timed out after no request to the sever continues during a first time; (b) displaying the application screen including the update information received from the server; and (c) not displaying the application screen corresponding to an operation with respect to the application screen that leads to an application screen including security information being displayed when the operation is executed by an operator after lapse of a second time from a most recent operation with respect to the application screen by the operator.

Such comprehensive or specific aspects may be realized by using a system, a method, an integrated circuit, a computer program, or a recording medium. Alternatively, such comprehensive or specific aspects may be realized by using an arbitrary combination of a system, a device, a method, an integrated circuit, a computer program, and a recording medium.

According to an aspect of the present disclosure, it is possible to establish both an automatic update function for a web application screen and a technique for disabling a session by means of a session timeout.

Hereinafter, an embodiment of the present disclosure will be described with reference to the drawings.

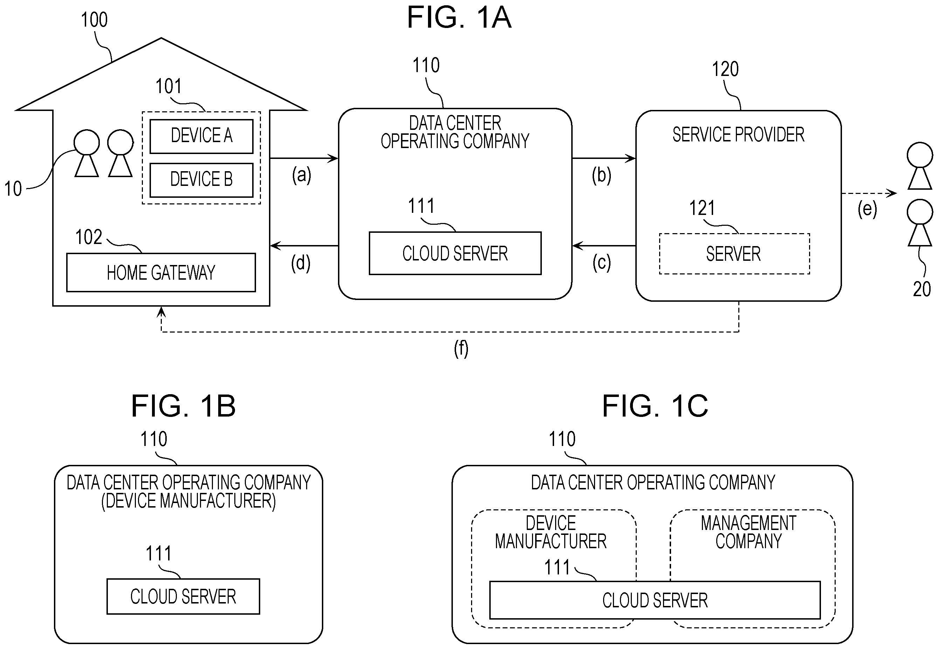

First, an overview of a service in the embodiment of the present disclosure will be described. Fig. 1A is a drawing depicting an example of an overall view of a system that provides a service in the embodiment of the present disclosure. A group 100 is a group such as a corporation, an association, or a store regardless of the scale thereof.

In the group 100, there are devices A and B that constitute a plurality of devices 101, and a home gateway 102. Among the plurality of devices 101, there are devices capable of connecting to the Internet (tablet terminals, PCs, and the like), and there are also devices that are not capable of connecting to the Internet by themselves (cookers, lights, air conditioners, refrigerators, and the like).

There may be devices that, despite not being capable of connecting to the Internet by themselves, are capable of connecting to the Internet via the home gateway 102. Furthermore, in the group 100, there is a user 10 who uses the plurality of devices 101.

A data center operating company 110 includes a cloud server 111. The cloud server 111 is a virtual server that cooperates with various devices via the Internet. The cloud server 111 mainly manages vary large data (big data) that is difficult to handle with normal database management tools and the like.

The data center operating company 110 manages data, manages the cloud server 111, and operates a data center that implements the aforementioned, for example. Details of the service performed by the data center operating company 110 are described later on.

Here, the data center operating company 110 is not restricted to a company that only manages data or operates the cloud server 111. Fig. 1B is a drawing depicting an example of the case where the data center operating company 110 is a device manufacturer.

For example, in the case where a device manufacturer that develops and manufactures one device from among the plurality of devices 101 also manages data, manages the cloud server 111, and so forth, the device manufacturer corresponds to the data center operating company 110, as depicted in Fig. 1B.

Furthermore, the data center operating company 110 is not restricted to being one company. Fig. 1C is a drawing depicting an example of the case where the data center operating company 110 is constituted by a device manufacturer and another management company. For example, in the case where a device manufacturer and another management company are managing data and operating the cloud server 111 on a joint or shared basis, both or either one of the device manufacturer and the management company corresponds to the data center operating company 110, as depicted in Fig. 1C.

Returning to the description of Fig. 1A, a service provider 120 possesses a server 121. The server 121 referred to here includes that constituted by a memory within a PC for personal use or the like regardless of the scale thereof. Furthermore, there are cases where the service provider 120 does not possess the server 121.

It should be noted that the home gateway 102 is not essential in the abovementioned service. For example, the home gateway 102 is not necessary in cases such as when the cloud server 111 is carrying out all of the data management. Furthermore, there are also cases where there are no devices that are not capable of connecting to the Internet by themselves, such as when all of the devices in a store are connected to the Internet.

Next, the flow of information in the abovementioned service will be described. First, the device A or the device B of the group 100 transmits log information to the cloud server 111 of the data center operating company 110. The cloud server 111 accumulates the log information of the device A or the device B (Fig. 1(a)).

Here, the log information is constituted by operating states and physical quantities such as temperature and humidity in the plurality of devices 101; for example, device power amounts that can be acquired from a distribution board, air conditioner setting modes (heating/cooling), and the like.

There are also cases where the log information is provided to the cloud server 111 directly from the plurality of devices 101 themselves via the Internet. Furthermore, log information may be temporarily accumulated in the home gateway 102 from the plurality of devices 101, and provided to the cloud server 111 from the home gateway 102.

Next, the cloud server 111 of the data center operating company 110 provides the accumulated log information to the service provider 120 in fixed units. Here, these units may be units with which it is possible for the data center operating company to organize and provide the accumulated information to the service provider 120, or units requested by the service provider 120. Furthermore, although fixed units have been mentioned, the units do not have to be fixed, and there are also cases where the amount of information provided varies according to the situation.

The abovementioned log information is saved in the server 121 of the service provider 120 as required (Fig. 1(b)). The service provider 120 then organizes the log information into information that conforms with the service to be provided to the user, and provides the organized information to the user.

The user to whom the information is provided may be the user 10 who uses the plurality of devices 101 or may be an external user 20. The information may then be provided to the user directly from the service provider (Fig. 1(e), (f)), for example. Furthermore, the information may be provided to the user by once again going through the cloud server 111 of the data center operating company 110 (Fig. 1(c), (d)), for example.

In addition, the cloud server 111 of the data center operating company 110 may organize the log information into information that conforms with the service to be provided to the user, and may provide the organized information to the service provider 120.

It should be noted that the user 10 and the user 20 may be different people or may be the same person.

Next, an application system of the embodiment of the present disclosure will be described in detail. The application system of the present embodiment is a system that provides a web application that remotely monitors and/or remotely controls the operating state of an electrical device such as an air conditioner or a refrigerator installed inside or outside of a factory, a store, or the like.

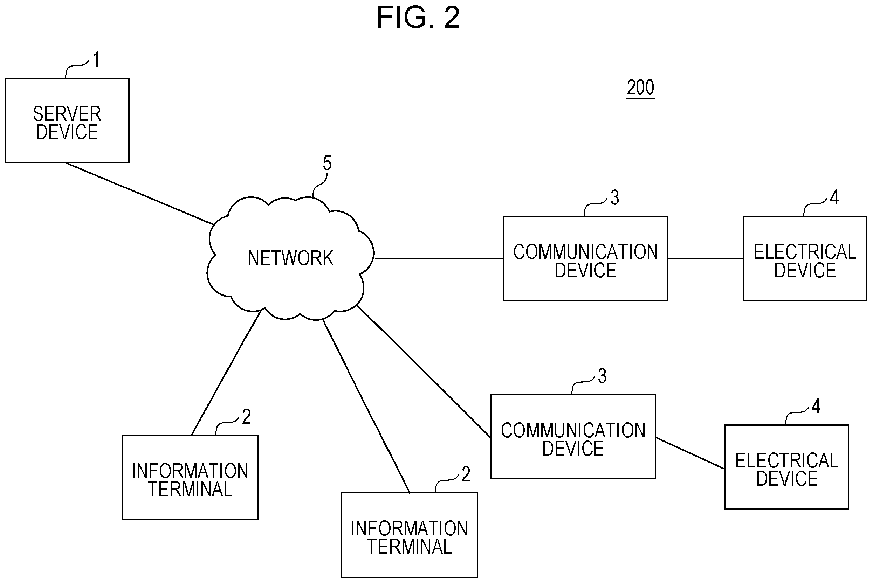

Fig. 2 is a block configuration diagram of an electrical device monitoring system 200 serving as an example of the application system according to the embodiment of the present disclosure. As depicted in Fig. 2, the electrical device monitoring system 200 has a server device 1, an information terminal 2, a communication device 3, an electrical device 4, and a network 5.

The server device 1 is connected in such a way as to be able to communicate with the information terminal 2 and the communication device 3 via the network 5, and is a server device that transmits and receives information with the information terminal 2 and the communication device 3. More specifically, the server device 1 has: an information collection function that collects operation information indicating the operating state of the electrical device 4, warning information regarding warnings issued when there has been an abnormality in the electrical device 4, images and videos in which the electrical device has been captured, and the like from the electrical device 4 via the communication device 3; and a server function for a web application service for providing information to the information terminal 2, which constitutes a client terminal.

The server device 1 may be constituted by one computer, or may be what is referred to as a cloud server realized by means of a plurality of computers connected to the network 5.

The information terminal 2 is a client terminal that acquires information corresponding to a request input by the user, from the server device 1 and displays the information. The information terminal 2 corresponds to the client of the present disclosure. The information terminal 2 is a terminal device such as a PC, a tablet terminal, a cellular phone, or a smartphone. It is desirable that the information terminal 2 be a portable terminal device for user convenience. More specifically, the information terminal 2 is able to log in to the web application service operated by the server device 1, and remotely operate the electrical device 4 on the basis of user input as well as displaying operation information and warning information of the electrical device 4 acquired from the server device 1, images and videos in which the electrical device has been captured, and the like as a web application screen.

The communication device 3 is connected to the electrical device 4, acquires information relating to the electrical device 4, in other words, information such as operation information and warning information of the electrical device 4 and images and videos in which the electrical device has been captured, and transmits said information to the server device 1.

The electrical device 4 is an apparatus that is installed inside or outside of a factory, a store, or the like, and operates by means of electricity, such as an air conditioner, a refrigerator, or a freezer. In the case where the electrical device 4 is an item of air conditioning equipment for example, the operation information of the electrical device 4 includes a setting temperature, an operating temperature, an indoor temperature, power consumption, and the like. Furthermore, the warning information is information generated when a problem has occurred in the operation of the electrical device 4, and includes information regarding the details and time of the problem that has occurred, and the like. Hereinafter, facilities such as factories and stores are referred to only as stores for simplicity.

The network 5 is a public network such as the Internet. The electrical device monitoring system 200 makes it possible for the user to log in to the web application service operated by the server device 1, and remotely monitor and remotely operate the electrical device 4 and so forth, via the information terminal 2. By using a portable terminal such as a tablet terminal or a smartphone as the information terminal 2, the user can monitor and control the electrical device 4 from various locations where an Internet connection is possible.

In the electrical device monitoring system 200, the web application service operated by the server device 1 handles security information that is preferably not disclosed to a third party. Therefore, this web application service is provided with a login authentication function so that access is possible only for a predetermined user.

In the present embodiment, "security information" is information that is permitted to be viewed by only a specified person, and, specifically, includes the personal information of employees who work at a store, store information such as the address and telephone number of the store, and equipment information such as the arranged state and arranged number of electrical devices 4 within the store, a layout diagram, and power consumption amounts and operating states, for example.

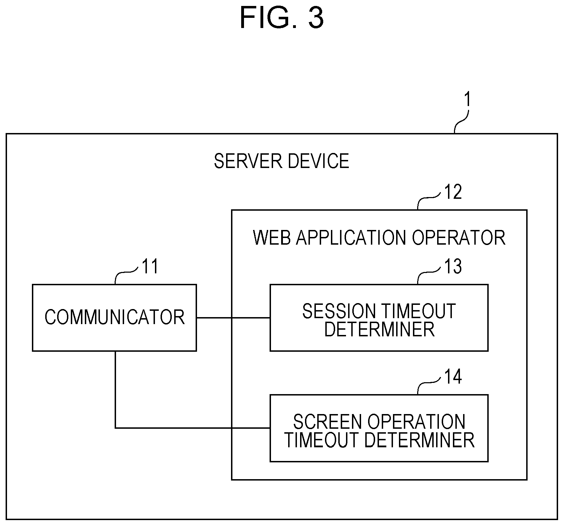

Next, a configuration of the server device 1 will be described. Fig. 3 is a block diagram depicting an example of a configuration of the server device 1. As depicted in Fig. 3, the server device 1 has a communicator 11, a web application operator 12, a session timeout determiner 13, and a screen operation timeout determiner 14.

The communicator 11 transmits and receives information with the information terminal 2 and the communication device 3 via the network 5. The web application operator 12 operates a web application service that acquires operation information and warning information relating to the electrical device 4 via the communication device 3 and transmits the operation information and warning information in accordance with requests from the information terminal 2, and also transmits operations from the information terminal 2 to the electrical device 4 for the electrical device 4 to be remotely operated. Furthermore, the web application operator 12 performs authentication of the information terminal 2 in accordance with a login request and a login ID and password from the information terminal 2, and logs in the information terminal 2 if the authentication is successful. The web application operator 12 transmits the operation information and warning information only in response to a request from a successfully authenticated information terminal 2.

The session timeout determiner 13 implements a session timeout function that disables a session with the information terminal 2 when, after the information terminal 2 has logged in to the abovementioned web application service, there have not been any new requests for a predetermined time or longer from the previous request from the information terminal 2.

The screen operation timeout determiner 14 implements a screen operation timeout function with which, in the case where the screen displayed on the information terminal 2 is an automatic update screen in which displayed content (information) is automatically updated at each prescribed time, when there have not been any requests other than automatic updates from the information terminal 2 for a predetermined time or longer, responses are not made to requests other than the automatic updates from the information terminal 2 thereafter. Details of operations of the session timeout determiner 13 and the screen operation timeout determiner 14 will be described later on.

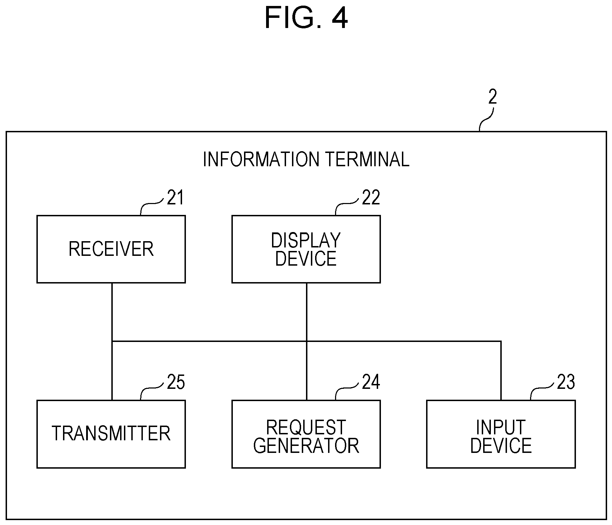

Next, a configuration of the information terminal 2 will be described. Fig. 4 is a block diagram depicting an example of a configuration of the information terminal 2. As depicted in Fig. 4, the information terminal 2 has a receiver 21, a display device 22, an input device 23, a request generator 24, and a transmitter 25.

The receiver 21 receives information transmitted from the server device 1 via the network 5. The display device 22 is a display device that displays information received by the receiver 21, and includes a display such as a liquid crystal display, an organic EL display, or a CRT monitor. The information displayed on the display device 22 is information relating to the web application service operated by the server device 1. A screen displayed on the display device 22 is, for example, a login screen for logging in to the web application service, a screen on which the operation information and warning information of the electrical device 4 is automatically updated in a periodic manner, or a screen for inputting an operation for the electrical device 4. The shape, layout, displayed content, and the like of these screens are not particularly restricted in the present disclosure.

The input device 23 is an input device that receives input operations performed by the user for the information terminal 2, and is a keyboard, a mouse, a touch panel that is formed integrally with the display device 22, or the like. When a user input operation is performed via the input device 23, the request generator 24 generates a request corresponding to the input operation.

As well as generating requests corresponding to input operations for the input device 23, the request generator 24 generates requests for automatically updating the screen at each predetermined time (automatic update requests). Details of the automatic update requests will be described later on. The transmitter 25 transmits requests generated by the request generator 24 to the server device 1 via the network 5.

The configuration of the electrical device monitoring system 200 serving as an example of the application system according to the embodiment of the present disclosure has been described hereinabove. Next, the session timeout function and the screen operation timeout function in the web application service operated by the server device 1 will be described.

### <Session Timeout Function>

The session timeout function will be described first. It should be noted that this session timeout function is the same as a conventional session timeout function.

The web application operator 12 includes the session timeout determiner 13, as depicted in Fig. 3. The session timeout determiner 13 detects requests for information acquisition or the like from the information terminal 2 after the information terminal 2 (the user operating the information terminal 2) has logged in, and disconnects (disables) the session if such a request is not generated during a prescribed session timeout time T1. It should be noted that the session timeout time T1 corresponds to the first time of the present disclosure.

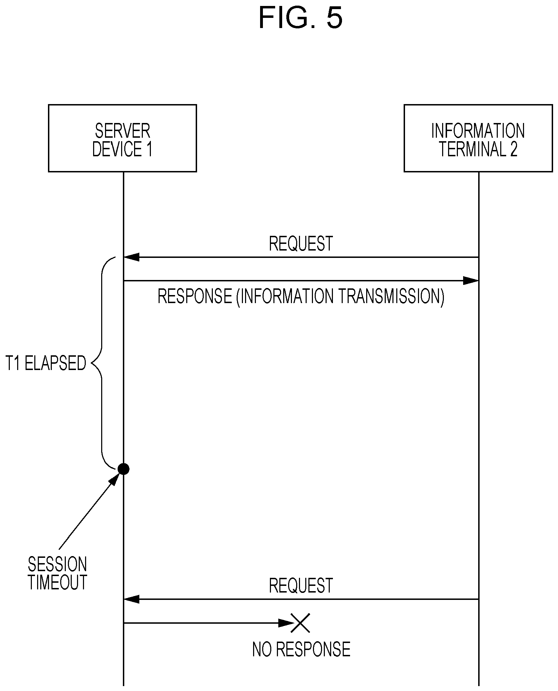

Fig. 5 is a sequence diagram for describing the session timeout function in the web application service. The sequence diagram depicted in Fig. 5 depicts the flow of processing after the information terminal 2 has logged in to the web application service operated by the server device 1.

When having received any kind of request such as a request for information from the information terminal 2, the server device 1 transmits information in response to the request and also measures time. A session timeout is determined in the case where there have not been any new requests from the information terminal 2 by when the session timeout time T1 has elapsed from the last time there was a request from the information terminal 2.

After the session timeout, the web application operator 12 causes that information terminal 2 to be logged off, and, even if there is a request from that information terminal 2 thereafter, the web application operator 12 does not respond to that request.

On the other hand, in the case where there is a new request within the session timeout time T1 after any kind of request, the server device 1 responds to that new request and also restarts the measurement of time from that new request, although not depicted.

The length of the session timeout time T1 is not particularly restricted in the present disclosure. It is preferable that T1 be long when the convenience of the user who uses the information terminal 2 is taken into consideration, and it is preferable that T1 be short when security is considered to be important. The length of T1 may be set as appropriate in accordance with the content and purpose of the web application service.

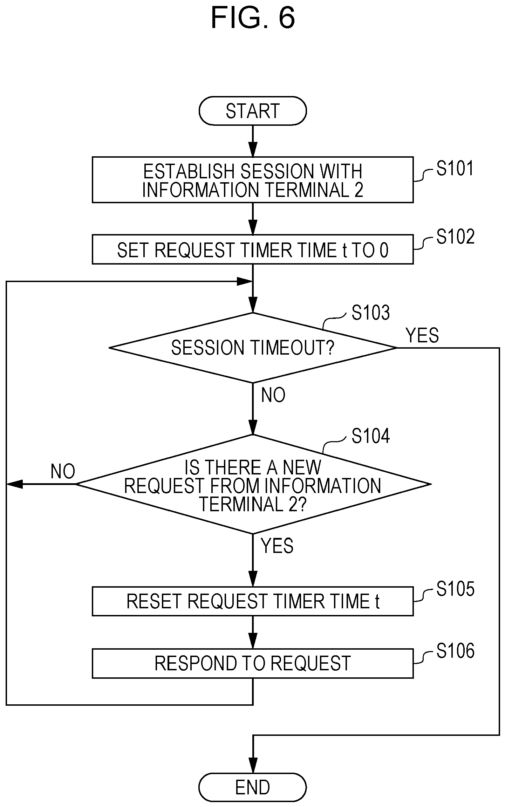

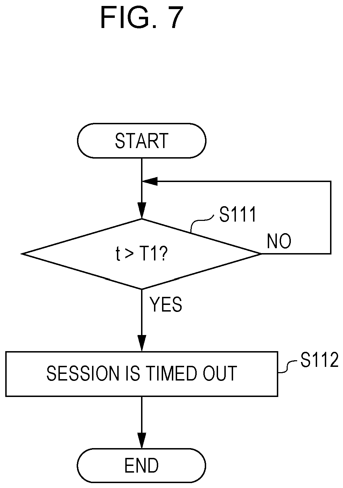

Fig. 6 and Fig. 7 are flowcharts depicting an example of an operation of the server device 1 when the session timeout function is operating. Fig. 6 is a flowchart depicting an example of an operation of the web application operator 12 in the session timeout function.

First, as depicted in Fig. 6, in step S101, in response to a request from the information terminal 2, the web application operator 12 of the server device 1 authenticates the information terminal 2 and then establishes a session with the information terminal 2. Together with establishing the session in step S101, the web application operator 12 sets a request timer time t [minutes] to 0 (step S102). It should be noted that the request timer time t is the time that has elapsed from the most recent request from the information terminal 2, and the web application operator 12 manages this request timer time t in association with a session ID that is given in each session.

In step S103, the web application operator 12 refers to a determination result of the session timeout determiner 13, which is described later on. In step S103, in the case where the determination result indicates that the session has been timed out, the web application operator 12 disconnects (disables) the session with the corresponding information terminal 2 and ends the processing. Even if there is any kind of request from the information terminal 2 thereafter, since the session has been disconnected, the web application operator 12 does not respond to the request.

On the other hand, in step S103, in the case where the determination result does not indicate that the session has been timed out, the web application operator 12, in step S104, determines whether or not there has been a new request from the information terminal 2. In the case where it is determined in step S104 that there has not been a request, the flow returns to step S103.

In the case where it is determined in step S104 that there has been a request, the web application operator 12 resets the request timer time t to 0 and causes the timer to restart (step S105). Then, in step S106, the web application operator 12 transmits information corresponding to the new request, namely information requested by the information terminal 2, to the information terminal 2. The flow then returns to step S103. It should be noted that the order of the processing of step S105 and step S106 may be reversed.

Next, Fig. 7 is a flowchart depicting an example of an operation of the session timeout determiner 13 in the session timeout function. After the request timer time t has been set to 0 in step S102 of Fig. 6, the session timeout determiner 13 determines whether the request timer time t has exceeded the predetermined session timeout time T1 (step S111). In the case where it is determined that the session timeout time T1 has not been exceeded in step S111, the flow repeats step S111. However, in the case where it is determined that the session timeout time T1 has been exceeded in step S111, the session timeout determiner 13 outputs a determination result indicating that the session has been timed out to the web application operator 12 (step S112).

As depicted in Fig. 6 and Fig. 7, the session timeout function of the web application service operated by the server device 1 is realized by the web application operator 12 and the session timeout determiner 13 of the server device 1.

It should be noted that, in the description of the abovementioned session timeout function diagrams, the requests depicted in Fig. 5 and Fig. 6 are requests including both automatic update requests that are described later on and requests other than automatic updates, namely all requests.

### <Screen Operation Timeout Function>

Next, the screen operation timeout function will be described. The screen operation timeout function operates at the same time as but independently from the abovementioned session timeout function, and the operations do not interfere or compete with each other.

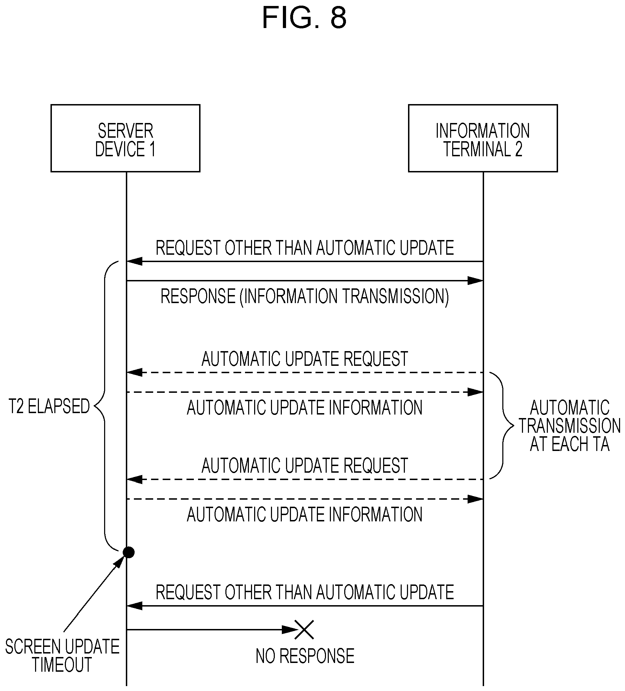

Fig. 8 is a sequence diagram for describing the screen operation timeout function in the web application service. As depicted in Fig. 8, the requests transmitted from the information terminal 2 to the server device 1 include automatic update requests that the information terminal 2 automatically transmits to the server device 1 in order for automatic updating of an automatic update screen to be carried out, and requests other than the aforementioned. A request other than an automatic update is, for example, a request that is triggered by an input operation or the like performed by the user via the input device 23 with respect to the screen displayed on the display device 22 of the information terminal 2. In Fig. 8, the flow of information relating to automatic update requests is represented by dotted line arrows, and requests other than automatic updates are represented by solid line arrows.

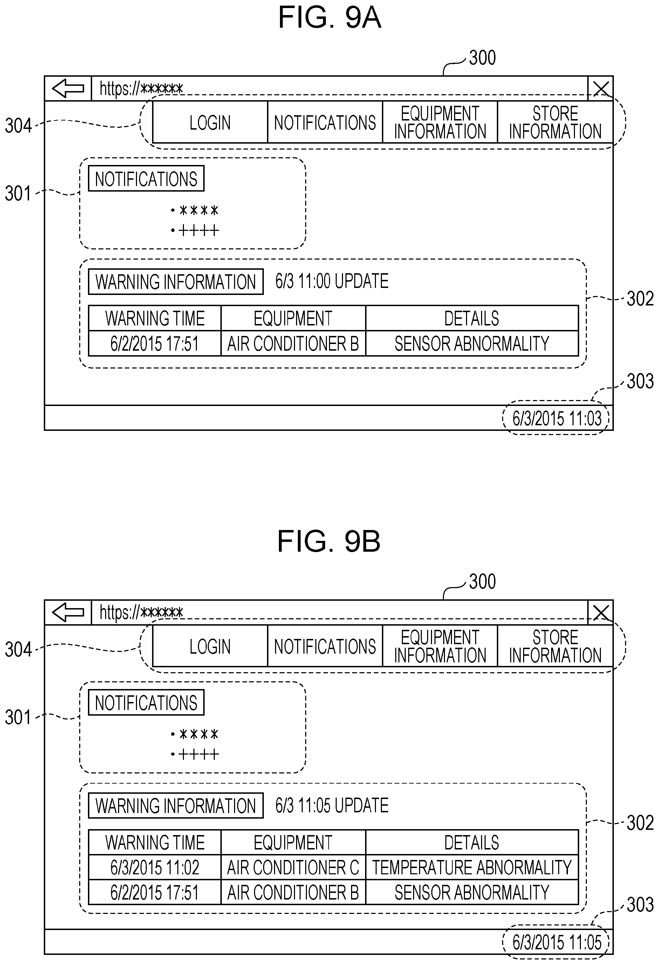

It should be noted that an automatic update refers to at least part of the screen displayed on the display device 22 of the information terminal 2 being automatically updated at each predetermined time. Figs. 9A and 9B are drawings depicting a notification screen 300 that is an example of a screen for which an automatic update is performed. The notification screen depicted in Figs. 9A and 9B is a screen that is displayed on the display device 22 of the information terminal 2 when a login has been performed to a web application service that displays warning information of the electrical device 4, operated by the server device 1. This screen is a screen that displays notifications for the user and warning information when an abnormality in the electrical device 4 has occurred.

As depicted in Figs. 9A and 9B, the notification screen 300 has a notification display field 301, a warning information display field 302, a current time display field 303, and screen transfer buttons 304. In Figs. 9A and 9B, the warning information displayed in the warning information display field 302 is automatic update information that is to be automatically updated. In the notification screen 300 depicted in Figs. 9A and 9B, the automatic update information is constituted by operation information such as the setting temperature, operating temperature, and power value of the electrical device 4 being remotely monitored from the information terminal 2, warning information regarding warnings notifying abnormalities in the electrical device 4, images and videos in which the electrical device 4 has been captured, and the like.

The notification display field 301 is a section in which the web application service displays matters to be notified to the user. The warning information display field 302 is a section in which information regarding warnings notifying abnormalities in the electrical device 4 is displayed, as described above. As depicted in Figs. 9A and 9B, the time at which the warning information has been updated is displayed in the warning information display field 302. The current time display field 303 is a section in which the current time is displayed. The current time displayed in the current time display field 303 is the current time specified by a clock function (not depicted) of the information terminal 2, for example. The screen transfer buttons 304 are buttons for transferring to another screen by the user clicking with a mouse pointer or touching by means of a touch panel, for example. As depicted in Figs. 9A and 9B, the screen transfer buttons 304 may be provided with transfer buttons to a plurality of different screens.

The notification display field 301 in Figs. 9A and 9B is not automatically updated, and unless specifically stated, it is hereinafter assumed that security information is not included in the content displayed in the notification display field 301. Furthermore, automatic update information displayed in the warning information display field 302 is information that does not include security information. This is to prevent a situation in which information including security information is automatically updated, and a third party who is not a legitimate user and has logged in to the web application service thereby views information including the automatically updated security information.

Furthermore, in Figs. 9A and 9B, the screen transfer buttons 304 include buttons for transferring to a plurality of different screens for displaying other information such as a login screen, a notification screen, (the screen displayed in Figs. 9A and 9B), an equipment information screen, and a store information screen. From thereamong, it is assumed that the screens other than the login screen display information including security information.

Fig. 9A is the notification screen 300 displaying a notification and a warning generation status at 11:03 on June 3, 2015. As depicted in Fig. 9A, the warning information may include not only whether or not there is a warning but also the time at which the warning occurred, the name of the equipment and the name of the store in which the warning occurred, and the like.

In Figs. 9A and 9B, an example is given in which the automatic update period is five minutes. Information that has been automatically updated at exactly 11:00 is displayed in Fig. 9A, and information that has been updated five minutes later at 11:05 is displayed in Fig. 9B. As depicted in Fig. 9B, in the case where a new warning has been generated during the automatic update period, new warning information is reflected on the screen in the next automatic update period (see the warning information display field 302 in Fig. 9B).

Here, in order for the automatic update information (warning information in Figs. 9A and 9B) in the automatic update screen to be automatically updated, the request generator 24 of the information terminal 2 periodically, repeatedly and automatically (regardless of user operations) generates a request that requests information that is automatically updated. This request is the automatic update request depicted in Fig. 8 and the like. Meanwhile, all requests other than the abovementioned automatic update request, in other words, requests generated according to user input operations with respect to the input device 23 such as a request to move from a certain screen to another screen, a request to (manually) update the screen currently being displayed, and a remote operation request that designates operation content for remotely operating the electrical device 4, are described as a request other than an automatic update request in Fig. 8 and the like.

We will now return to the description of Fig. 8. When having received a request other than an automatic update such as a request for information from the information terminal 2 after the information terminal 2 has logged in, the server device 1 transmits information in response to the request and also starts measuring time by means of the screen operation timeout determiner 14. Furthermore, when having received an automatic update request from the information terminal 2, the server device 1 transmits automatic update information to the user terminal.

As depicted in Fig. 8, an automatic update request is automatically transmitted from the information terminal 2 to the server device 1 at each predetermined time TA. In the case where the automatic update screen is displayed on the display device 22 for example, this automatic update request is automatically generated at each predetermined time TA by the request generator 24 and transmitted by the transmitter 25. The request generator 24 generates an automatic update request that corresponds to information to be automatically updated in the automatic update screen that is being displayed on the display device 22 at such time. Hereinafter, this predetermined time TA is referred to as the automatic update period.

When the information terminal 2 receives automatic update information from the server device 1, the automatic update information on the automatic update screen displayed on the display device 22 is updated. Thus, the most recent automatic update information is always displayed on the display device 22 without the user particularly having to perform an update operation. It should be noted that an automatic update request is transmitted from the information terminal 2 to the server device 1 at each automatic update period TA while the automatic update information is being automatically updated, and therefore, as described in relation to Fig. 5 and Fig. 6, a session timeout of the server device 1 does not occur, and the session continues while the automatic update screen is being displayed. It is therefore desirable that the automatic update period TA be a time that is shorter than the abovementioned session timeout time T1.

The screen operation timeout determiner 14 of the server device 1 can distinguish between an automatic update request and other requests. The screen operation timeout determiner 14 determines a screen operation timeout in the case where a screen operation timeout time T2 has elapsed between a request other than an automatic update being received and a new request other than an automatic update being next received. When a screen operation timeout is determined, the web application operator 12 of the server device 1 thereafter does not respond to new requests that are not automatic updates. It should be noted that the screen operation timeout time T2 corresponds to the second time of the present disclosure. The web application operator 12 is an example of the controller of the present disclosure.

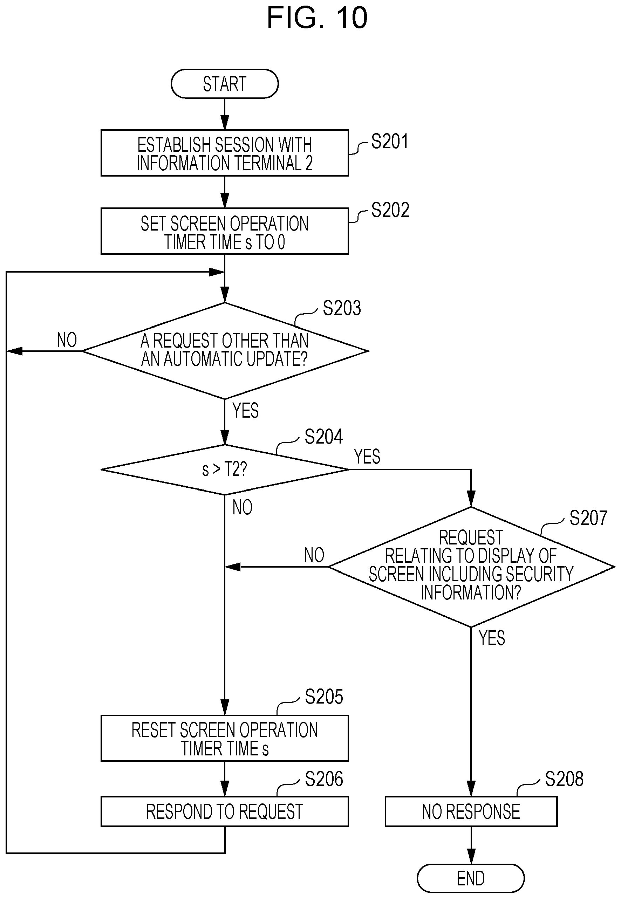

Fig. 10 is a flowchart depicting an example of an operation of the server device 1 when the screen operation timeout function operates. First, as depicted in Fig. 10, in step S201, in response to a request from the information terminal 2, the web application operator 12 of the server device 1 authenticates the information terminal 2 and then establishes a session with the information terminal 2. Together with establishing the session in step S201, the web application operator 12 sets a screen operation timer time s [minutes] to 0 (step S202). It should be noted that the screen operation timer time s is the time that has elapsed from the most recent request other than an automatic update being received from the information terminal 2, and the web application operator 12 manages this screen operation timer time s in association with a session ID that is given in each session. This screen operation timer time s is different from the request timer time t described in Fig. 5 and Fig. 7.

In step S203, the screen operation timeout determiner 14 determines whether or not there is a new request other than an automatic update from the information terminal 2. In the case where there is no request other than an automatic update, the flow repeats step S203.

On the other hand, in the case where it is determined in step S203 that there has been a request other than an automatic update, in step S204, the screen operation timeout determiner 14 determines whether or not the screen operation timer time s has exceeded the screen operation timeout time T2.

In the case where it is determined in step S204 that the screen operation timeout time T2 has not been exceeded, in step S205, the web application operator 12 resets the screen operation timer time s to 0 and restarts the screen operation timeout function. The web application operator 12 then transmits information corresponding to the new request other than an automatic update acquired in step S203, namely the requested information, to the information terminal 2 (step S206). The flow then returns to step S203. It should be noted that the order of step S205 and step S206 may be reversed.

However, in step S204, in the case where it is determined that the screen operation timer time s has exceeded the screen operation timeout time T2, the web application operator 12 determines whether or not the request in step S203 is a request relating to the display of a screen that includes security information (step S207). Here, a request relating to the display of a screen that includes security information is, for example, a request for transferring to a screen displaying information that includes security information, such as the "equipment information" button or the "store information" button from among the screen transfer buttons 304 depicted in Fig. 9A and Fig. 9B.

In step S207, in the case where a request relating to the display of a screen that includes security information is determined, the web application operator 12 transfers to a screen operation timeout state and does not respond to the request in step S203 (step S208). It should be noted that the screen that is displayed on the display device 22 of the information terminal 2 in the case where the web application operator 12 has not responded to the request in step S203 is described in detail later on. In the screen operation timeout state, the session between the server device 1 and the information terminal 2 is maintained but the web application operator 12 responds only to requests other than requests relating to the display of a screen that includes security information and to automatic update requests from the information terminal 2, and does not respond at all to requests relating to the display of a screen that includes security information.

However, in step S207, in the case where a request relating to the display of a screen that includes security information has not been determined, the flow returns to step S205.

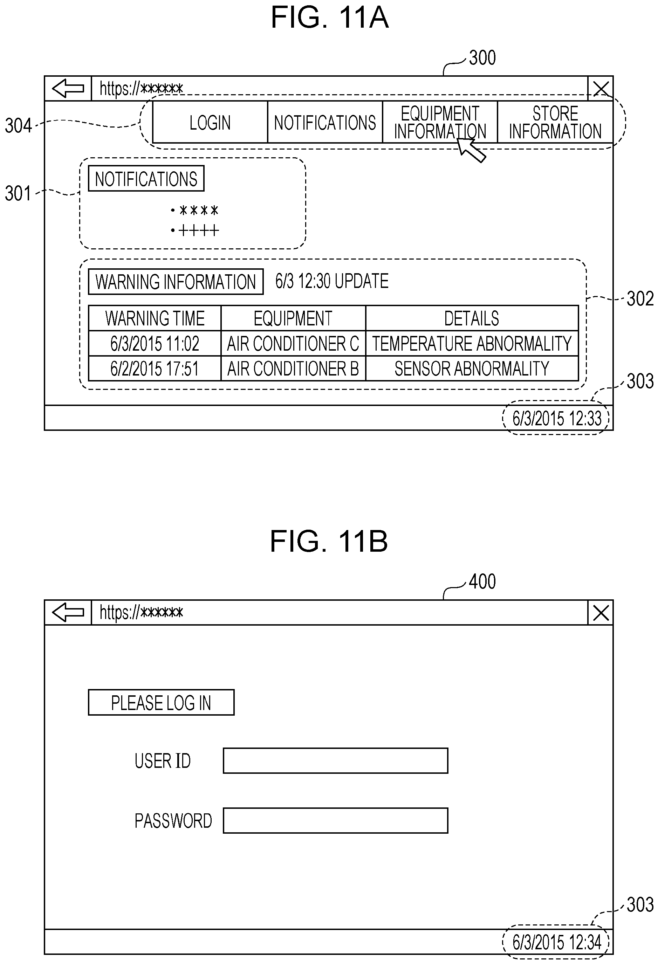

Next, a detailed description will be given regarding the screen that is displayed on the display device 22 of the information terminal 2 in the case where the web application operator 12 has not responded to a request relating to the display of a screen that includes security information, after a screen operation timeout. Fig. 11A to Fig. 13B are drawings depicting examples of screens that are displayed on the display device 22 of the information terminal 2 in the screen operation timeout state. Hereinafter, each screen will be described in detail.

### <First Example>

Figs. 11A and 11B depict a first example of a screen in the screen operation timeout state. Figs. 11A and 11B are drawings for describing a display transfer after a screen operation timeout in the notification screen 300 that serves as an example of an automatic update screen. The screen depicted in Fig. 11A, although the same screen as in Figs. 9A and 9B, is a screen after a screen operation timeout has already been implemented internally. In the first example, as depicted in Fig. 11A, the same screen as that from prior to the screen operation timeout is displayed on display device 22 until a transfer operation relating to the display of a screen that includes security information is performed by the user after the screen operation timeout has been implemented.

As depicted in Fig. 11A, automatic updates in the notification screen 300 continue also after the screen operation timeout, and the warning information display field 302 that displays automatic update information is updated at each predetermined time.

Fig. 11B displays an example of a display screen in the case where a transfer operation relating to the display of a screen that includes security information is performed by the user in Fig. 11A. Fig. 11B is a login screen 400 for the web application service operated by the server device 1. In other words, in the case where there has been a request relating to the display of a screen that includes security information from the information terminal 2 in the screen operation timeout state, the web application operator 12 causes authentication to be carried out once again in the login screen 400 even though the session with the information terminal 2 is still continuing.

In this way, in the present embodiment, the web application operator 12 establishes both a session timeout function and a screen operation timeout function. An effect such as the following is thereby obtained. In the case where a screen that does not include automatic update information is being displayed on the display device 22 after the information terminal 2 has logged in to the web application service operated by the server device 1, if there are no requests from the information terminal 2 for the session timeout time T1 or longer, the web application operator 12 disconnects (disables) the session with the information terminal 2 due to the session timeout function. Therefore, even if a session ID is stolen by a malicious third party by means of session hijacking or the like, that session ID cannot be used because the session has been disabled, and security information cannot be viewed by the third party even in the case where security information is being displayed on the display screen.

On the other hand, with a screen that includes automatic update information such as that depicted in Figs. 9A and 9B for example, a session timeout does not occur in the case where the automatic update period TA for the automatic update information is made to be shorter than the session timeout time T1. However, in the case where there has not been a request other than an automatic update from the user for the screen operation timeout time T2 or longer, when there has thereafter been a request relating to the display of a screen that includes security information, due to the screen operation timeout function, the web application operator 12 does not respond to the request and transfers to the login screen 400 to request a login to be performed again.

Therefore, after the screen operation timeout time T2 has elapsed, in the case where a session ID is stolen by a malicious third party by means of session hijacking or the like and that session ID is used to access the server device 1, automatic update information that does not include security information can be viewed but screens that include security information are not displayed. Security in the web application service can therefore be ensured.

In the first example depicted in Figs. 11A and 11B, a transfer is performed to the login screen 400 in the case where a transfer operation relating to the display of a screen that includes security information is performed by the user after the screen operation timeout; however, it should be noted that the present disclosure is not restricted thereto. For example, a transfer may be performed to a screen declaring "Timed Out" or the like.

### <Second Example>

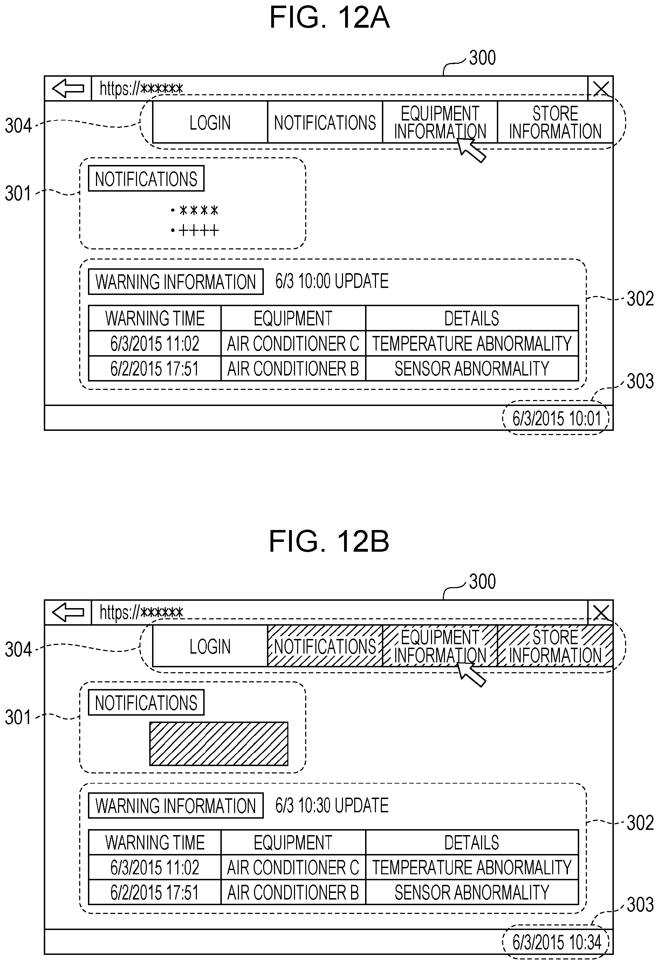

Figs. 12A and 12B depict a second example of a screen in the screen operation timeout state. Figs. 12A and 12B, similar to Figs. 11A and 11B, are drawings for describing a display transfer after a screen operation timeout in the notification screen 300 that serves as an example of the automatic update screen. Fig. 12A is a screen before a screen operation timeout, and Fig. 12B is a screen after a screen operation timeout.

As indicated in the current time display field 303, Fig. 12B depicts a screen after a screen operation timeout has been implemented due to 30 minutes or more having elapsed from the screen depicted in Fig. 12A and there having been no user operations during that time. After the screen operation timeout, the "equipment information" button and the "store information" button, which are buttons to screens that include security information, from among the screen transfer buttons 304 have been grayed out for example and can no longer be selected, as depicted in Fig. 12B. Thus, after the screen operation timeout, the user can no longer transfer to the equipment information screen or the store information screen.

Furthermore, if the information displayed in the notification display field 301 is security information, the display field may be grayed out for example such that the information can no longer be viewed, as depicted in Fig. 12B. In this case, the "notifications" button from among the screen transfer buttons 304 is also a button to a screen that includes security information, and can therefore no longer be selected, as depicted in Fig. 12B.

According to this kind of configuration, after a screen operation timeout, even if a session ID is stolen by a malicious third party by means of session hijacking or the like, the third party who has used that session ID to access the server device 1 is able to view automatic update information such as the warning information displayed in the warning information display field 302 that does not include security information, but is not able to transfer to the equipment information screen or the store information screen, which are other screens that include other security information, namely the information displayed in the notification display field 301. Security can therefore be ensured.

It should be noted that, in the case where the legitimate user attempts to view a screen that includes security information, from the screen after the session timeout depicted in Fig. 12B, the session may be restored by clicking a link button to the login screen from among the screen transfer buttons 304 for example, and once again logging in on the login screen such as that depicted in Fig. 11B.

### <Third Example>

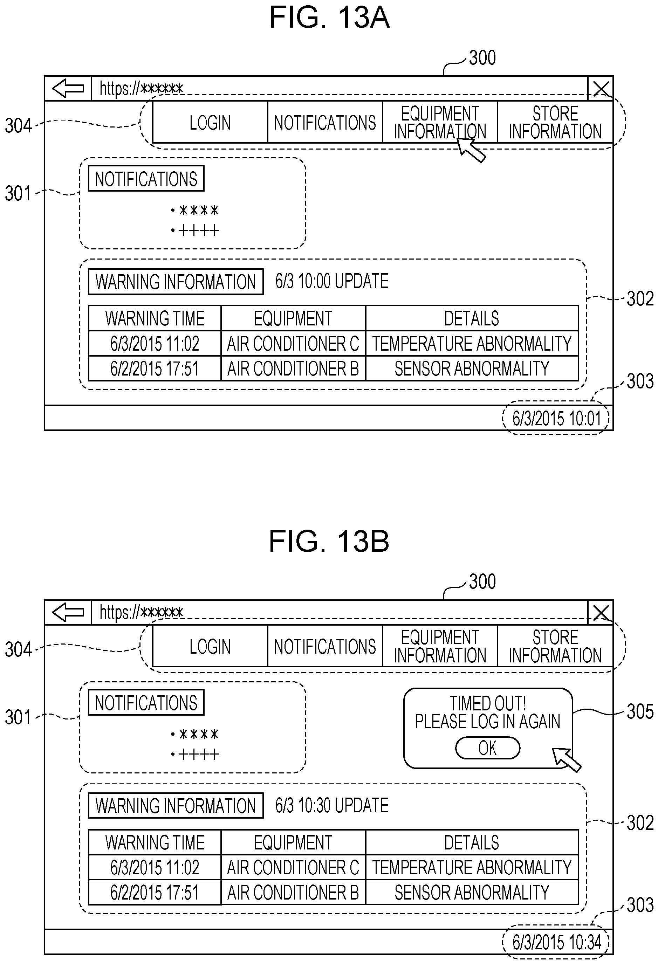

Figs. 13A and 13B depict a third example of a screen in the screen operation timeout state. Figs. 13A and 13B, similar to Figs. 11A and 11B and Figs. 12A and 12B, are drawing for describing a display transfer after a screen operation timeout in the notification screen 300 that serves as an example of the automatic update screen. Similar to Fig. 12A, Fig. 13A is a screen before a screen operation timeout, and Fig. 13B is a screen after a screen operation timeout.

Similar to Fig. 12B, as indicated in the current time display field 303, Fig. 13B depicts a screen after a screen operation timeout has been implemented due to 30 minutes or more having elapsed from the screen depicted in Fig. 13A and there having been no user operations during that time. After the screen operation timeout, a pop-up window 305 such as "Timed Out" is displayed, as depicted in Fig. 12B.

In Fig. 13B, an operation button such as "OK" is provided in the pop-up window 305, and operations other than with respect to the OK button of the pop-up window 305 in the notification screen 300, namely operations with respect to other sections of the notification screen 300, are disabled while the pop-up window 305 is displayed. Then, when the user operates the OK button of the pop-up window 305, a transfer is performed to a login screen such as that depicted in Fig. 11B.

In Fig. 13B, although user operation other than with respect to the pop-up window 305 are not received at all, automatic updates of automatic update information such as the warning information displayed in the warning information display field 302 are carried out.

According to this kind of configuration, after a screen operation timeout, even if a session ID is stolen by a malicious third party by means of session hijacking or the like, the third party who has used that session ID to access the server device 1 is able to view automatic update information such as the warning information displayed in the warning information display field 302, which is information that does not include security information, but is not able to perform an operation such as transferring to the equipment information screen or the store information screen, which are other screens that include security information. Security can therefore be ensured.

In particular, by arranging the pop-up window 305 in a location in which the warning information display field 302 that is a display field for automatic update information is not hidden, it becomes possible for the user to continuously view the automatic update information even after the pop-up window 305 has been displayed, as depicted in Fig. 13B. The automatic update information is not security information, and therefore user convenience can be improved while ensuring security.

As described above, a method for controlling the information terminal 2 in an application system according to a first aspect of the present disclosure includes: (a) requesting a server to transmit update information for predetermined information included in an application screen before a session with the server is timed out after no request to the sever continues during a first time; (b) displaying the application screen including the update information received from the server; and (c) not displaying the application screen corresponding to an operation with respect to the application screen that leads to an application screen including security information being displayed when the operation is executed by an operator after lapse of a second time from a most recent operation with respect to the application screen by the operator.

According to this kind of configuration, the application system of the present disclosure has both the functions of a session timeout function and a screen operation timeout function. An effect such as the following is thereby obtained. In the case where a screen that does not include automatic update information is being displayed on the display device 22 after the information terminal 2 has logged in to the web application service operated by the server device 1, if there are no requests from the information terminal 2 for the session timeout time T1 or longer, the web application operator 12 disconnects (disables) the session with the information terminal 2 due to the session timeout function. Therefore, even if a session ID is stolen by a malicious third party by means of session hijacking or the like, that session ID cannot be used because the session has been disabled, and security information cannot be viewed by the third party even in the case where security information is being displayed on the display screen.

Meanwhile, in the case where automatic update information such as that displayed in Figs. 9A and 9B is being displayed on the display device 22 of the information terminal 2, a session timeout does not occur since the automatic update period TA is set to be shorter than the session timeout time T1. However, in the case where there have not been any requests other than automatic updates from the user for the screen operation timeout time T2 or longer, due to the screen operation timeout function, even when there has thereafter been a request relating to the display of a screen that includes security information, the web application operator 12 does not respond to the request, and transfers to a login screen such as that depicted in Fig. 11B to request a login to be performed again.

Therefore, after the screen operation timeout time T2 has elapsed, in the case where a session ID is stolen by a malicious third party by means of session hijacking or the like and that session ID is used to access the server device 1, automatic update information that does not include security information can be viewed but screens that include security information are not displayed. Security in the web application service can therefore be ensured.

It should be noted that in the "operation with respect to the application screen that leads to an application screen including security information being displayed is executed by the operator" described in (c) mentioned above, the application screen operated by the operator may be the application screen including the update information in (b) or may be another different application screen. Furthermore, the "application screen corresponding to the operation" described in (c) may be either an application screen including security information or a screen from which it is possible to transfer to a screen including security information. Here, a screen from which it is possible to transfer to a screen including security information is a screen from which a screen transfer operation to a screen including security information is possible, such as a screen including the screen transfer buttons 304 that transfer to a screen including security information such as the equipment information screen and the store information screen, and that screen itself may not include security information.

Furthermore, a method for controlling an information terminal in an application system according to a second aspect of the present disclosure includes, in the method for controlling an information terminal in the application system according to the abovementioned first aspect, (d) displaying the application screen corresponding to the operation with respect to the application screen that leads to the application screen including the security information being displayed when the operation is executed before lapse of a second time from a most recent operation with respect to the application screen by an operator.

It should be noted that, in (d), the application screen on which the most recent operation has been performed by the operator is an arbitrary application screen, and may be an application screen including automatic update information or an application screen not including automatic update information.

According to this kind of configuration, in the case where an operation to display an application screen including security information has been performed within the screen operation timeout time T2, the screen corresponding to the operation is displayed, and user convenience is therefore improved.

Furthermore, for a method for controlling an information terminal in an application system according to a third aspect of the present disclosure, for example, in the method for controlling an information terminal in the application system according to any one of the abovementioned first or second aspect, in (c), an application screen requesting authentication of the operator is displayed. According to this kind of configuration, after a screen operation timeout, it is not possible to access a screen including security information unless a login is performed once again, and security can therefore be ensured. It should be noted that an application screen requesting authentication of the operator may be an independent login screen such as that depicted in Fig. 11B, which is displayed after transferring from the application screen operated by the operator in (c), or alternatively may be a screen implemented by a login window including a user ID input field and a password input field popping up, which is displayed in a state where the application screen operated by the operator in (c) is maintained.

Furthermore, for a method for controlling an information terminal in an application system according to a fourth aspect of the present disclosure, for example, in the method for controlling an information terminal in the application system according to any one of the abovementioned first to third aspects, in (c), an application screen notifying the operator that the operation with respect to the application screen cannot be executed is displayed. According to this kind of configuration, the user is able to perceive that the operation is not possible, and user convenience is therefore improved.

Furthermore, for a method for controlling an information terminal in an application system according to a fifth aspect of the present disclosure, for example, in the method for controlling an information terminal in the application system according to the abovementioned fourth aspect, the application screen notifying the operator that the operation with respect to the application screen cannot be executed is displayed with a pop-up. According to this kind of configuration, the user is able to perceive that the operation is not possible, and user convenience is therefore improved.

Furthermore, for a method for controlling an information terminal in an application system according to a sixth aspect of the present disclosure, for example, in the method for controlling an information terminal in the application system according to the abovementioned fifth aspect, the application screen displayed with the pop-up is displayed in a location where the update information of the application screen including the update information is not covered, and execution of (a) and (b) is continued even when the application screen is being displayed. According to this kind of configuration, automatic updating and the display of automatic update information not including security information is continued also while the pop-up window 305 is being displayed after a screen operation timeout, and user convenience is therefore improved.

Furthermore, a method for controlling an information terminal in an application system according to a seventh aspect of the present disclosure, for example, includes, in the method for controlling an information terminal in the application system according to any one of the abovementioned first to sixth aspects, (e) disabling at least one of an operation button and an icon on the application screen when a period in which an operation with respect to the application screen by the operator is not executed becomes equal to or longer than the second time. According to this kind of configuration, it is possible to prevent a screen including security information from being viewed by a malicious third party or the like after a screen operation timeout.

Furthermore, a method for controlling an information terminal in an application system according to an eighth aspect of the present disclosure, for example, includes, in the method for controlling an information terminal in the application system according to any one of the abovementioned first to seventh aspects, (f) changing to a state in which it is not possible to view the security information included in the application screen including the update information when a period in which an operation with respect to the application screen by the operator is not executed becomes equal to or longer than the second time. According to this kind of configuration, in the case where security information is included in the automatic update information or some other display section, that information can no longer be viewed after a screen operation timeout, and security can therefore be ensured.

Furthermore, for a method for controlling an information terminal in an application system according to a ninth aspect of the present disclosure, for example, in the method for controlling an information terminal in the application system according to any one of the abovementioned first to eighth aspects, the predetermined information is information relating to a state of an electrical device to be monitored. According to this kind of configuration, it is possible to easily perform remote monitoring and remote operation of the electrical device 4 installed in a factory, a store, or the like.

Furthermore, for a method for controlling an information terminal in an application system according to a tenth aspect of the present disclosure, for example, in the method for controlling an information terminal in the application system according to any one of the abovementioned first to ninth aspects, the information relating to the state of the electrical device includes at least one of warning information of the electrical device, measurement data of the electrical device, an image in which the electrical device is captured, and a video in which the electrical device is captured. According to this kind of configuration, it is possible to easily perform remote monitoring and remote operation of the electrical device 4 installed in a factory, a store, or the like.

Furthermore, for a method for controlling an information terminal in an application system according to an eleventh aspect of the present disclosure, for example, in the method for controlling an information terminal in the application system according to any one of the abovementioned first to seventh aspects and ninth and tenth aspects, in (b), the application screen does not include the security information. According to this kind of configuration, security information is not included in a screen that is continued to be displayed when a screen operation timeout has been implemented, and security can therefore be ensured even in the case where the information terminal 2 has been left without being operated, for example.

Furthermore, for a method for controlling an information terminal in an application system according to a twelfth aspect of the present disclosure, for example, in the method for controlling an information terminal in the application system according to any one of the abovementioned first to eleventh aspects, in (b), an update time for the update information is displayed on the application screen including the update information. It is thereby possible to easily confirm whether or not the automatic update information is the most recent, and user convenience can therefore be improved.

Furthermore, a program in an application system according to a thirteenth aspect of the present disclosure executes: (a) requesting a server to transmit update information for predetermined information included in an application screen before a session with the server is timed out after no request to the sever continues during a first time; (b) displaying the application screen including the update information received from the server; and (c) not displaying the application screen corresponding to an operation with respect to the application screen that leads to an application screen including security information being displayed when the operation is executed by an operator after lapse of a second time from a most recent operation with respect to the application screen by the operator. It should be noted that the abovementioned processing (a), (b), and (c) may be executed in the information terminal, or the information terminal and the server device. Specifically, possible examples include a mode in which (a), (b), and (c) are executed in the information terminal, and a mode in which (a) and (b) are carried out in the information terminal and (c) is executed in the server device.

Furthermore, an application system according to a fourteenth aspect of the present disclosure includes an information terminal that displays an application screen; and a server that transmits data required to display the application screen to the information terminal in response to a request from the information terminal. The information terminal includes: a transmitter that transmits a request signal, which requests transmission of update information for predetermined information displayed on the application screen, to the server before a session with the server is timed out after no request to the sever continues during a first time; and a display device that includes a display. The server includes a controller that does not cause the display to display application screen corresponding to an operation with respect to the application screen that leads to an application screen including security information being displayed when the operation is executed by an operator after lapse of a second time from a most recent operation with respect to the application screen by the operator.

It should be noted that in the abovementioned embodiment of the present disclosure, a session is always active while the automatic update screen is being displayed. Therefore, if there is an increase in the number of users who have logged in to the electrical device monitoring system 200, which is the web application of the present embodiment, and are viewing the automatic update screen, a situation may occur in which it becomes difficult for the server device 1 to manage the session IDs of the users. In a case such as this, an increase in the active session IDs may be suppressed by restricting the number of login users who are able to view the automatic update screen, in other words, restricting the number of login IDs having a privilege that enables viewing of the automatic update screen.

Furthermore, in the abovementioned embodiment, it is assumed that communication is performed between the server (server device 1) and the client (information terminal 2), but communication may be performed between peer-to-peer terminals.

Furthermore, in the abovementioned embodiment, the screen operation timeout function is realized by the screen operation timeout determiner 14 of the server device 1, but the present disclosure is not restricted thereto. For example, the server device 1 may not be provided with the screen operation timeout determiner 14, and the information terminal 2 may be provided with a substitute therefor. In this case, a screen operation timeout determiner of the information terminal 2 measures the screen operation timeout time T2, and, in the case where there has been a request such as a screen transfer request for the input device 23 after T2 has elapsed from the information terminal 2 transmitting a request other than an automatic update without a new request other than an automatic update being transmitted, the request generator 24 may not be made to generate a request, and the display device 22 may not be made to display a screen corresponding to the request.

Hereinabove, the embodiment according to the present disclosure has been described in detail with reference to the drawings; however, the functions of the devices such as the abovementioned server device 1 and information terminal 2 may be realized by means of a computer program.

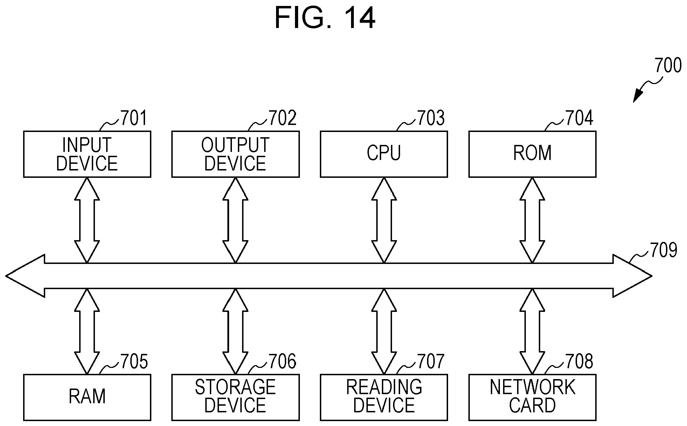

Fig. 14 is a drawing depicting a hardware consideration of a computer 700 that realizes the functions of the devices by means of a program.

For example, this computer 700 is provided with an input device 701 such as a keyboard, a mouse, and a touchpad, an output device 702 such as a display and a speaker, a CPU 703, a read-only memory (ROM) 704, a random-access memory (RAM) 705, a storage device 706 such as a hard disk device or a solid-state drive (SSD), a reading device 707 that reads information from a recording medium such as a digital versatile disc read-only memory (DVD-ROM) or a Universal Serial Bus (USB) memory, and a network card 708 that performs communication via a network, and the units are connected by a bus 709.

The reading device 707 reads a program for realizing the functions of the devices from a recording medium having the program recorded thereon, and causes the storage device 706 to store the read program. Alternatively, the network card 708 communicates with a server device connected to the network, and causes the storage device 706 to store the program for realizing the functions of the devices, which has been downloaded from the server device.

The CPU 703 then copies the program stored in the storage device 706 to the RAM 705, and sequentially reads out commands included in that program from the RAM 705 and executes the commands, thereby realizing the functions of the devices.

It should be noted that the technique described in the abovementioned embodiment may be realized in the following cloud services models, for example. However, the models with which the technique described in the abovementioned embodiment is realized are not restricted to the following.

### (Service Model 1: Type Where a Company Itself Serves as a Data Center)

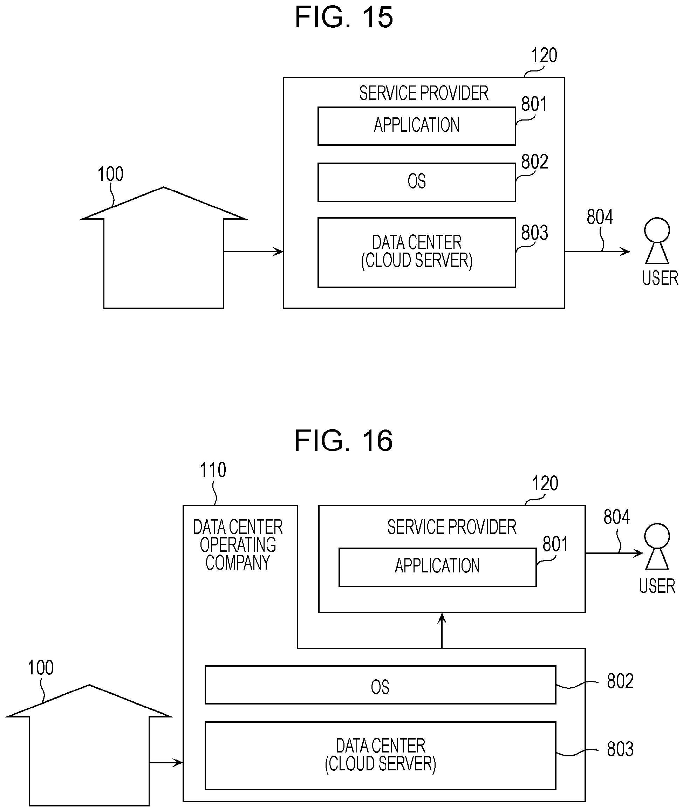

Fig. 15 is a drawing depicting service model 1 (type where a company itself serves as a data center). In the present model, a service provider 120 acquires information from the group 100, and provides a service to users. In the present model, the service provider 120 has the functions of a data center operating company. In other words, the service provider possesses the cloud server 111, which manages big data. Accordingly, there is no data center operating company.

In the present model, the service provider 120 operates and manages a data center 803 (cloud server 111). Furthermore, the service provider 120 manages an OS 802 and an application 801. The service provider 120 uses the OS 802 and the application 801 managed by the service provider 120 to provide a service 804.

### (Service Model 2: laaS-Utilizing Type)

Fig. 16 is a drawing depicting service model 2 (laaS-utilizing type). Here, laaS is an abbreviation for infrastructure as a service, and is a cloud service provision model in which an infrastructure for constructing and operating a computer system is itself provided as a service via the Internet.

In the present model, the data center operating company operates and manages the data center 803 (cloud server 111). Furthermore, the service provider 120 manages the OS 802 and the application 801. The service provider 120 uses the OS 802 and the application 801 managed by the service provider 120 to provide the service 804.

### (Service Model 3: PaaS-Utilizing Type)

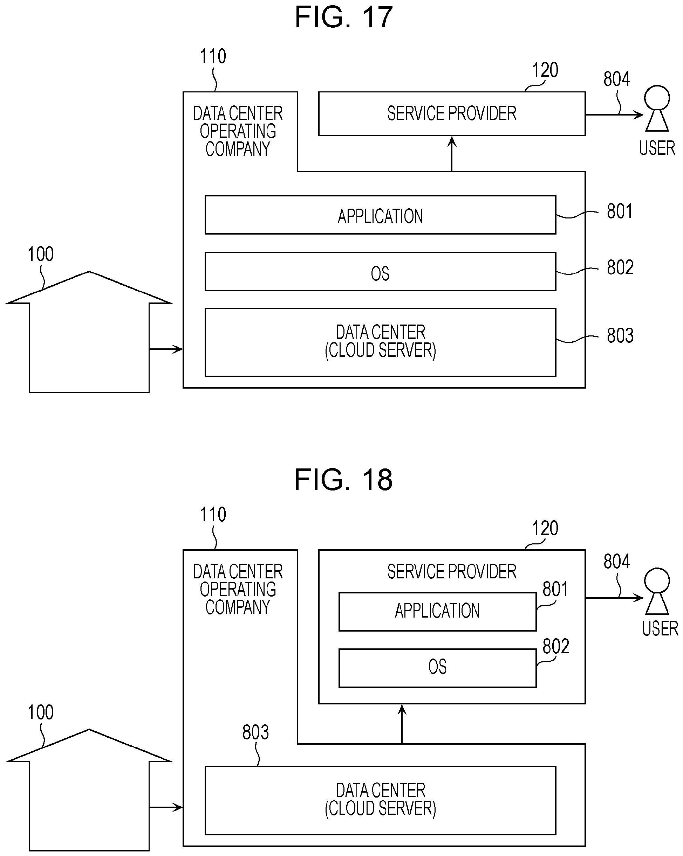

Fig. 17 is a drawing depicting service model 3 (PaaS-utilizing type). Here, PaaS is an abbreviation for platform as a service, and is a cloud service provision model in which a platform that is a foundation for constructing and operating software is provided as a service via the Internet.

In the present model, the data center operating company 110 manages the OS 802, and operates and manages the data center 803 (cloud server 111). Furthermore, the service provider 120 manages the application 801. The service provider 120 uses the OS 802 managed by the data center operating company and the application 801 managed by the service provider 120 to provide the service 804.

### (Service Model 4: SaaS-Utilizing Type)

Fig. 18 is a drawing depicting service model 4 (SaaS-utilizing type). Here, SaaS is an abbreviation for software as a service, and is a cloud service provision model that has a function with which it is possible for, for example, a company/individual (user) that does not possess a data center (cloud server) to use an application provided by a platform provider that does possess a data center (cloud server), via a network such as the Internet.

In the present model, the data center operating company 110 manages the application 801, manages the OS 802, and operates and manages the data center 803 (cloud server 111). Furthermore, the service provider 120 uses the OS 802 and the application 801 managed by the data center operating company 110 to provide the service 804.

The service provider 120 performs a service provision action in all of the above models. Furthermore, for example, the development of an OS, an application, a database for big data, and the like may be implemented by the service provider 120 or the data center operating company 110 itself, or may be outsourced to a third party.

The present disclosure can be applied to a method for controlling an information terminal with which a web application that displays automatic update information is executed.

## Claims

1. A method for controlling an information terminal (2), comprising:
(a) requesting, by the information terminal (2), a server (1) to transmit update information for predetermined information included in an application screen (300) before a session with the server (1) is timed out after no request to the sever continues during a first time; and
(b) displaying, on the information terminal (2), the application screen (300) including the update information received from the server (1);
**characterized by**
(c) causing, by the server (1), the information terminal (2) not to display (S208) the application screen (300) corresponding to an operation with respect to the application screen (300) that leads to an application screen (300) including security information being displayed when the operation is executed by an operator after lapse of a second time from a most recent operation with respect to the application screen (300) by the operator.

2. The method for controlling an information terminal (2) according to claim 1, further comprising:
(d) displaying (S206) the application screen (300) corresponding to the operation with respect to the application screen (300) that leads to the application screen (300) including the security information being displayed when the operation is executed by the operator before lapse of the second time from the most recent operation with respect to the application screen (300) by the operator.

3. The method for controlling an information terminal (2) according to claim 1,
wherein, in the step (c), an application screen (400) requesting authentication of the operator is displayed.

4. The method for controlling an information terminal (2) according to claim 1,
wherein, in the step (c), an application screen (300) notifying the operator that the operation with respect to the application screen (300) cannot be executed is displayed.

5. The method for controlling an information terminal (2) according to claim 4,
wherein the application screen (300) notifying the operator that the operation with respect to the application screen (300) cannot be executed is displayed with a pop-up (305).

6. The method for controlling an information terminal (2) according to claim 5,
wherein the application screen (300) displayed with the pop-up (305) is displayed in a location where the update information of the application screen (300) including the update information is not covered, and execution of the step (a) and the step (b) is continued even when the application screen (300) is being displayed.

7. The method for controlling an information terminal (2) according to claim 1, further comprising:
(e) disabling at least one of an operation button (304) and an icon on the application screen (300) when a period in which an operation with respect to the application screen (300) by the operator is not executed becomes equal to or longer than the second time.

8. The method for controlling an information terminal (2) according to claim 1, further comprising:
(f) changing to a state in which it is not possible to view the security information included in the application screen (300) including the update information when a period in which an operation with respect to the application screen (300) by the operator is not executed becomes equal to or longer than the second time.

9. The method for controlling an information terminal (2) according to claim 1,
wherein the predetermined information is information relating to a state of an electrical device (4) to be monitored.

10. The method for controlling an information terminal (2) according to claim 9,
wherein the information relating to the state of the electrical device (4) includes at least one of warning information of the electrical device (4), measurement data of the electrical device (4), an image in which the electrical device (4) is captured, and a video in which the electrical device (4) is captured.

11. The method for controlling an information terminal (2) according to claim 1,
wherein, in the step (b), the application screen (300) does not include the security information.

12. The method for controlling an information terminal (2) according to claim 1,
wherein, in the step (b), an update time for the update information is displayed on the application screen (300) including the update information.

13. An application system, comprising:
an information terminal (2) configured to display an application screen (300); and
a server (1) configured to transmit data required to display the application screen (300) to the information terminal (2) in response to a request from the information terminal (2), wherein
the information terminal (2) includes:
a transmitter (25) configured to transmit a request signal, which requests transmission of update information for predetermined information displayed on the application screen (300), to the server (1) before a session with the server (1) is timed out after no request to the sever continues during a first time; and
a display device (22) that includes a display configured to display said application screen,
**characterized in that** the server (1) includes:
a controller (12) that is configured to cause the display device not to display the application screen (300) corresponding to an operation with respect to the application screen (300) that leads to an application screen (300) including security information being displayed when the operation is executed by an operator after lapse of a second time from a most recent operation with respect to the application screen (300) by the operator.

## Patentansprüche

1. Verfahren zum Steuern eines Informationsendgeräts (2), mit:
(a) Auffordern eines Servers (1) durch das Informationsendgerät (2) zum Übermitteln von Aktualisierungsinformation für vorbestimmte Information, die in einem Anwendungsbildschirm (300) enthalten ist, bevor eine Sitzung mit dem Server (1) abläuft, nachdem fortdauernd während einer ersten Zeit keine Aufforderung an den Server vorliegen würde, und
(b) Anzeigen des Anwendungsbildschirms (300) auf dem Informationsendgerät (2) mit der Aktualisierungsinformation, die von dem Server (1) empfangen wurde,
**gekennzeichnet durch**
(c) Veranlassen des Informationsendgeräts (2) durch den Server (1), den Anwendungsbildschirm (300) entsprechend zu einer Bedienung hinsichtlich des Anwendungsbildschirms (300) nicht anzuzeigen (S208), die dazu führt, dass ein Anwendungsbildschirm (300) mit Sicherheitsinformation angezeigt wird, wenn die Bedienung durch einen Bediener nach Ablauf einer zweiten Zeit von einer jüngsten Bedienung hinsichtlich des Anwendungsbildschirms (300) durch den Bediener an durchgeführt wird.

2. Verfahren zum Steuern eines Informationsendgeräts (2) nach Anspruch 1, ferner mit:
(d) Anzeigen (S206) des Anwendungsbildschirms (300) entsprechend der Bedienung hinsichtlich des Anwendungsbildschirms (300), die dazu führt, dass der Anwendungsbildschirm (300) mit der Sicherheitsinformation angezeigt wird, wenn die Bedienung durch den Bediener ausgeführt wird, bevor von der jüngsten Bedienung hinsichtlich des Anwendungsbildschirms (300) durch den Bediener an die zweite Zeit abläuft.

3. Verfahren zum Steuern eines Informationsendgeräts (2) nach Anspruch 1,
wobei in dem Schritt (c) ein Anwendungsbildschirm (400), der eine Authentifizierung des Bedieners anfordert, angezeigt wird.

4. Verfahren zum Steuern eines Informationsendgeräts (2) nach Anspruch 1,
wobei in dem Schritt (c) ein Anwendungsbildschirm (300) angezeigt wird, der den Bediener darüber benachrichtigt, dass die Bedienung hinsichtlich des Anwendungsbildschirms (300) nicht ausgeführt werden kann.

5. Verfahren zum Steuern eines Informationsendgeräts (2) nach Anspruch 4,
wobei der Anwendungsbildschirm (300), der den Bediener darüber benachrichtigt, dass die Bedienung hinsichtlich des Anwendungsbildschirms (300) nicht ausgeführt werden kann, mit einem Pop-Up (305) angezeigt wird.

6. Verfahren zum Steuern eines Informationsendgeräts (2) nach Anspruch 5,
wobei der Anwendungsbildschirm (300), der mit dem Pop-Up (305) angezeigt wird, an einer Position angezeigt wird, an der die Aktualisierungsinformation des Anwendungsbildschirms (300) mit der Aktualisierungsinformation nicht bedeckt ist, und eine Ausführung des Schritts (a) und des Schritts (b) fortgesetzt wird, auch wenn der Anwendungsbildschirm (300) angezeigt wird.

7. Verfahren zum Steuern eines Informationsendgeräts (2) nach Anspruch 1, ferner mit:
(e) Deaktivieren eines Bedienungsknopfes (304) und/oder eines Icons auf dem Anwendungsbildschirm (300), wenn eine Zeitdauer, in der eine Bedienung hinsichtlich des Anwendungsbildschirms (300) durch den Bediener nicht ausgeführt wird, gleich oder länger als die zweite Zeit wird.

8. Verfahren zum Steuern eines Informationsendgeräts (2) nach Anspruch 1, ferner mit:
(f) Wechseln in einen Zustand, in dem es nicht möglich ist, die Sicherheitsinformation, die in dem Anwendungsbildschirm (300) mit der Aktualisierungsinformation enthalten ist, anzusehen, wenn eine Zeitdauer, in der eine Bedienung hinsichtlich des Anwendungsbildschirms (300) durch den Bediener nicht durchgeführt wird, gleich oder länger als die zweite Zeit wird.

9. Verfahren zum Steuern eines Informationsendgeräts (2) nach Anspruch 1,
wobei die vorbestimmte Information eine Information hinsichtlich eines Zustands eines zu überwachenden elektrischen Geräts (4) ist.

10. Verfahren zum Steuern eines Informationsendgeräts (2) nach Anspruch 9,
wobei die Information hinsichtlich des Zustands des elektrischen Geräts (4) eine Warninformation des elektrischen Geräts (4), Messdaten des elektrischen Geräts (4), ein Bild, in dem die elektrische Vorrichtung (4) aufgenommen ist, und/oder ein Video umfasst, in dem die elektrische Vorrichtung (4) aufgenommen ist.

11. Verfahren zum Steuern eines Informationsendgeräts (2) nach Anspruch 1,
wobei in dem Schritt (b) der Anwendungsbildschirm (300) die Sicherheitsinformation nicht aufweist.

12. Verfahren zum Steuern eines Informationsendgeräts (2) nach Anspruch 1,
wobei in dem Schritt (b) eine Aktualisierungszeit für die Aktualisierungsinformation auf dem Anwendungsbildschirm (300) mit der Aktualisierungsinformation angezeigt wird.

13. Anwendungssystem, mit:
einem Informationsendgerät (2), das ausgestaltet ist, einen Anwendungsbildschirm (300) anzuzeigen, und
einem Server (1), der ausgestaltet ist, in Antwort auf eine Aufforderung von dem Informationsendgerät (2) Daten an das Informationsendgerät (2) zu übermitteln, die zum Anzeigen des Anwendungsbildschirms (300) nötig sind,
wobei das Informationsendgerät (2) umfasst:
einen Sender (25), der ausgestaltet ist, bevor eine Sitzung mit dem Server (1) abläuft, nachdem fortdauernd während einer ersten Zeit keine Aufforderung an den Server vorliegen würde, ein Aufforderungssignal an den Server (1) zu senden, das zu einer Übermittlung von Aktualisierungsinformation für vorbestimmte Information auffordert, die auf dem Anwendungsbildschirm (300) angezeigt wird, und
eine Anzeigevorrichtung (22), die eine Anzeige umfasst, die ausgestaltet ist, den Anwendungsbildschirm anzuzeigen,
**gekennzeichnet dadurch, dass** der Server (1) umfasst:
eine Steuereinheit (12), die ausgestaltet ist, die Anzeigevorrichtung zu veranlassen, den Anwendungsbildschirm (300) entsprechend zu einer Bedienung hinsichtlich des Anwendungsbildschirms (300) nicht anzuzeigen, die dazu führt, das ein Anwendungsbildschirm (300) mit Sicherheitsinformation angezeigt wird, wenn die Bedienung durch einen Bediener nach Ablauf einer zweiten Zeit von einer jüngsten Bedienung hinsichtlich des Anwendungsbildschirms (300) durch den Bediener an durchgeführt wird.

## Revendications

1. Procédé de commande d'un terminal d'information (2), comprenant:
(a) demander, par le terminal d'information (2), à un serveur (1) de transmettre de l'information de mise à jour pour de l'information prédéterminée incluse dans un écran d'application (300) avant qu'une session avec le serveur (1) se termine après qu'aucune demande au serveur ne serait présente en continu pendant un premier temps; et
(b) afficher, sur le terminal d'information (2), l'écran d'application (300) comprenant l'information de mise à jour reçue en provenance du serveur (1);
**caractérisé par**
(c) amener le terminal d'information (2), par le serveur (1), à ne pas afficher (S208) l'écran d'application (300) correspondant à une commande par rapport à l'écran d'application (300) qui mène à ce qu'un écran d'application (300) comprenant de l'information de sécurité soit affichée lorsque la commande est exécutée par un opérateur après l'expiration d'un deuxième temps à partir d'une commande la plus récente par rapport à l'écran d'application (300) par l'opérateur.

2. Procédé de commande d'un terminal d'information (2) selon la revendication 1, comprenant en outre:
(c) afficher (S206) l'écran d'application (300) correspondant à la commande par rapport à l'écran d'application (300) qui mène à ce que l'écran d'application (300) comprenant l'information de sécurité soit affichée lorsque la commande est exécutée par l'opérateur avant l'expiration du deuxième temps à partir de la commande la plus récente par rapport à l'écran d'application (300) par l'opérateur.

3. Procédé de commande d'un terminal d'information (2) selon la revendication 1,
dans lequel, à l'étape (c), un écran d'application (400) demandant une authentification de l'opérateur est affiché.

4. Procédé de commande d'un terminal d'information (2) selon la revendication 1,
dans lequel, à l'étape (c), un écran d'application (300) notifiant à l'opérateur que la commande par rapport à l'écran d'application (300) ne peut pas être exécutée est affiché.

5. Procédé de commande d'un terminal d'information (2) selon la revendication 4,
dans lequel l'écran d'application (300) notifiant à l'opérateur que la commande par rapport à l'écran d'application (300) ne peut pas être exécutée est affiché avec une fenêtre pop-up (305).

6. Procédé de commande d'un terminal d'information (2) selon la revendication 5,
dans lequel l'écran d'application (300) affiché avec la fenêtre pop-up (305) est affiché sur une position où l'information de mise à jour de l'écran d'application (300) comprenant l'information de mise à jour n'est pas couverte, et une mise en œuvre de l'étape (a) et de l'étape (b) se poursuit même lorsque l'écran d'application (300) est affiché.

7. Procédé de commande d'un terminal d'information (2) selon la revendication 1, comprenant en outre:
(e) désactiver un bouton de commande (304) et/ou une icône sur l'écran d'application (300) lorsqu'une période pendant laquelle une commande par rapport à l'écran d'application (300) par l'opérateur n'est pas exécutée devient égale ou supérieure au deuxième temps.

8. Procédé de commande d'un terminal d'information (2) selon la revendication 1, comprenant en outre:
(f) passer à un état dans lequel il n'est pas possible de visualiser l'information de sécurité incluse dans l'écran d'application (300) comprenant l'information de mise à jour lorsqu'une période au cours de laquelle une commande par rapport à l'écran d'application (300) par l'opérateur n'est pas exécutée devient égale ou supérieure au deuxième temps.

9. Procédé de commande d'un terminal d'information (2) selon la revendication 1,
dans lequel l'information prédéterminée est une information relative à un état d'un dispositif électrique (4) à surveiller.

10. Procédé de commande d'un terminal d'information (2) selon la revendication 9,
dans lequel l'information relative à l'état du dispositif électrique (4) comprend une information d'avertissement du dispositif électrique (4), des données de mesure du dispositif électrique (4), une image dans laquelle le dispositif électrique (4) est capturé et/ou une vidéo dans laquelle le dispositif électrique (4) est capturé.

11. Procédé de commande d'un terminal d'information (2) selon la revendication 1,
dans lequel, à l'étape (b), l'écran d'application (300) ne comprend pas l'information de sécurité.

12. Procédé de commande d'un terminal d'information (2) selon la revendication 1,
dans lequel, à l'étape (b), un temps de mise à jour pour l'information de mise à jour est affiché sur l'écran d'application (300) comprenant l'information de mise à jour.

13. Système d'application comprenant:
un terminal d'information (2) configuré pour afficher un écran d'application (300), et
un serveur (1) configuré pour transmettre au terminal d'information (2), en réponse à une demande du terminal d'information (2), des données nécessaires pour afficher l'écran d'application (300),
dans lequel le terminal d'information (2) comprend:
un émetteur (25) configuré pour transmettre au serveur (1), avant qu'une session avec le serveur (1) se termine après qu'aucune demande au serveur ne serait présente en continu pendant un premier temps, un signal de demande qui demande une transmission d'information de mise à jour pour une information prédéterminée affichée sur l'écran d'application (300), et
un dispositif d'affichage (22) qui comprend un affichage configuré pour afficher ledit écran d'application,
**caractérisé par le fait que** le serveur (1) comprend:
une unité de commande (12) qui est configurée pour amener le dispositif d'affichage à ne pas afficher l'écran d'application (300) correspondant à une commande par rapport à l'écran d'application (300) qui mène à ce qu'un écran d'application (300) comprenant de l'information de sécurité soit affichée lorsque la commande est exécutée par un opérateur après l'expiration d'un deuxième temps à partir d'une commande la plus récente par rapport à l'écran d'application (300) par l'opérateur.
